# FASCICULE DE BREVET EUROPEEN

(11) **EP 3 561 266 B1**
(45) Date de publication et mention de la délivrance du brevet: **10.03.2021**
(21) Numéro de dépôt: 19171452.6
(22) Date de dépôt: 26.04.2019
(51) Int. Cl.: F02C 7/36, F16H 57/08

(54) **PROCEDE D'ASSEMBLAGE POUR UN TRAIN D'ENGRENAGES EPICYCLOÏDAL OU PLANETAIRE**
VERFAHREN ZUM ZUSAMMENBAU EINES EPIZYKLOIDAL ODER PLANETEN-GETRIEBES
METHOD FOR ASSEMBLING A EPICYCLOIDAL OR PLANETARY TRANSMISSION

(30) Priorité: 26.04.2018 FR 1853649
(43) Date de publication de la demande: 30.10.2019
(73) Titulaire: Safran Transmission Systems, 92700 Colombes (FR)
(72) Inventeur: NIEPCERON, Clément, Paul, René, 77550 MOISSY-CRAMAYEL (FR); MORELLI, Boris, Pierre, Marcel, 75014 PARIS (FR); SIMON, Adrien, Louis, 77550 MOISSY-CRAMAYEL (FR)
(74) Mandataire: Ernest Gutmann - Yves Plasseraud S.A.S.

(56) Documents cités:
- FR-A1- 2 914 719
- US-A1- 2010 056 321
- US-A1- 2013 251 511

## Description

### DOMAINE

La présente invention concerne un procédé d'assemblage pour un train d'engrenages épicycloïdal ou planétaire destiné à équiper une turbomachine, telle que par exemple un turboréacteur ou un turbopropulseur d'avion, et un train d'engrenages épicycloïdal.

### CONTEXTE

Une turbomachine peut comprendre un train d'engrenages effectuant la liaison entre son arbre de turbine et un ou plusieurs éléments de sortie, tel par exemple qu'une soufflante. Ce type de train d'engrenages comprend un planétaire interne entraîné par un arbre d'entrée, par exemple un arbre de turbine, un planétaire externe (également appelé couronne), coaxial au planétaire interne, des satellites engrenant à la fois avec le planétaire interne et avec le planétaire externe, et un porte-satellites sur lequel les satellites sont montés rotatifs. Les satellites sont montés de façon mobile en rotation sur des pivots qui sont insérés dans les alésages du porte-satellites.

Dans une configuration particulière, le train d'engrenages peut effectuer une réduction de la vitesse entre une entrée et une sortie de celui-ci. La variation du rapport de réduction d'un tel train d'engrenages s'obtient par la modification du nombre de dents du planétaire interne, des satellites et du planétaire externe, et par l'architecture du réducteur, c'est-à-dire épicycloïdal ou planétaire. Ces deux types de train d'engrenages se distinguent l'un de l'autre par le fait que dans le train d'engrenages dit épicycloïdal, la couronne est fixe et le porte-satellites est libre en rotation. A l'inverse, dans le train d'engrenages dit planétaire, le porte-satellites est fixe et le planétaire externe est libre en rotation.

Un exemple de porte-satellites est décrit dans US2010/56321A1.

Il est observé, dans le cas de ces deux types de train d'engrenages, une disparité au niveau de la puissance transitant par les satellites du porte-satellites. Cette disparité peut résulter en une surcharge des contraintes mécaniques appliquées à certains satellites.

Selon la norme ANSI/AGMA 6123-B06 établie par l'AGMA (acronyme anglais pour American Gear Manufacturers Association, l'association des fabricants américains d'engrenages), la surcharge de chacun des satellites d'un train épicycloïdal ou planétaire doit être d'environ 12%, en conditions réelles de fonctionnement.

L'une des causes de cette disparité est le défaut de positionnement relatif des satellites, et en particulier les défauts de positionnement tangentiel relatif des satellites les uns par rapport aux autres autour de l'axe du porte-satellites. De plus, le désalignement des dentures des satellites avec les dentures du planétaire interne et du planétaire externe conduisent à une usure prématurée desdites dentures, obligeant à une maintenance régulière augmentant les coûts d'exploitation de la turbomachine.

Dans la technique actuelle, une solution pour réduire ce phénomène de surcharge consiste à appairer les pivots portant les satellites et les alésages du porte-satellites lors de l'usinage et du montage des pièces. L'appairage consiste à définir des couples, pivot-alésage, de sorte que le pivot et l'alésage d'un couple sont destinés à être assemblés ensemble. Une conséquence d'un tel appairage est que les pivots de deux couples ne sont pas interchangeables.

L'appairage complexifie la gestion des stocks de pièces lors de l'assemblage ou la maintenance des trains épicycloïdaux. De plus, les opérations d'appairage sont contraignantes puisqu'elles nécessitent des tâches préalables complexes à l'assemblage des éléments constitutifs du porte-satellites, ce qui entraine des coûts de production élevés, et rendent les opérations de maintenance plus complexes.

L'invention a notamment pour but de réduire les défauts de positionnement des satellites dans le porte-satellites de manière simple, efficace et économique, en imposant une conception particulière des pivots, et sans avoir à recourir à l'appairage.

### RESUME DE L'INVENTION

La présente invention concerne tout d'abord un procédé d'assemblage pour un train d'engrenages épicycloïdal ou planétaire d'un porte-satellites comprenant un ou plusieurs alésages, chacun des alésages étant destiné à recevoir un pivot, le procédé comprenant les étapes de la revendication 1.

Les défauts de localisation des alésages sur le porte-satellites ainsi que les défauts de concentricité des pivots contribuent au décalage tangentiel de l'axe réel par rapport à l'axe théorique. De manière générale, en raison des tolérances et possiblement de défauts de fabrication des alésages, chacun desdits alésages présente un axe réel distinct de l'axe théorique.

Ainsi, bien que les pivots et les alésages présentent individuellement des axes réels excentrés par rapport à leurs axes théoriques, l'assemblage selon le procédé de l'invention permet de minimiser l'excentricité des axes résultant des ensembles pivot-alésage.

L'orientation du pivot dans le porte-satellites lors de l'étape de montage c) de manière à ce que l'excentricité du pivot compense au moins en partie l'excentricité dudit alésage, permet aux excentricités des axes réels du pivot et de l'alésage de se compenser en partie.

L'orientation des pièces lors du montage permet alors de corriger le défaut de position tangentiel relatif entre les satellites, et par conséquent, de réduire le phénomène de surcharge des satellites des pivots et des alésages, sans pour autant modifier les tolérances de fabrication des alésages du porte-satellites et des pivots.

Ainsi, chaque pivot est compatible avec chaque alésage, moyennant une orientation angulaire adéquate du pivot dans l'alésage au montage.

Ce procédé, ne nécessitant pas d'appairage, permet en outre l'interchangeabilité des pièces lors du montage ou des opérations de maintenance. Ainsi, quel que soit le pivot monté dans un des alésages, l'orientation du pivot dans l'alésage, avec le procédé selon l'invention, permet de réduire le défaut résultant de l'ensemble pivot-alésage.

Du fait de la meilleure maîtrise de la fabrication des pivots et de ses pistes de roulement, les défauts de concentricité des pivots sont statistiquement moins importants que les défauts de localisation des alésages sur le porte-satellites, de sorte que le défaut des pivots peut, dans certains cas, ne pas être suffisant pour compenser le défaut de positionnement des alésages dans le porte-satellites.

Afin d'assurer une compensation systématique au moins en partie des axes réels du pivot et de l'alésage, le procédé selon l'invention propose, au préalable du montage, une étape de fabrication du pivot avec une excentricité contrôlée de l'axe réel du pivot.

L'étape a) du procédé selon l'invention peut ainsi comprendre :
- fabriquer au moins un pivot comprenant :
   ▪ au moins une piste de roulement dont l'axe coïncide avec l'axe réel du pivot, et
   ▪ au moins une portée de frettage du pivot dans un alésage dont l'axe coïncide avec l'axe théorique du pivot.

L'excentricité de l'axe réel par rapport à l'axe théorique est contrôlée lors de la fabrication selon l'invention d'un pivot, en modifiant l'axe de révolution des pistes de roulement du pivot, habituellement confondu avec l'axe de la portée de frettage, dans le cas d'un pivot sans défaut d'excentricité de son axe réel.

En introduisant ainsi une excentricité entre les pistes de roulement et la portée de frettage du pivot, un défaut minimum du pivot est assuré, permettant son utilisation effective lors du procédé de montage selon l'invention.

L'étape a) peut comprendre en outre les étapes suivantes :
- diviser chacun desdits pivots en n secteurs angulaires *i*₁ ... *i_{q}* ... *iₙ* s'étendant autour de l'axe théorique dudit pivot ;
- définir un vecteur *̅V̅*̅ orienté de l'axe théorique vers l'axe réel, et identifier le secteur angulaire *i_{q}* comprenant le vecteur *-V̅.*

L'étape c) peut, de plus, comprendre les étapes suivantes :
i) diviser chacun desdits alésages du porte-satellites en *k* secteurs angulaires *j*₁ ...*jₗ* ...*jₖ* s'étendant autour de l'axe théorique dudit alésage;
ii) pour chaque alésage définir un vecteur *̅U̅*̅ orienté de l'axe théorique vers l'axe réel, et identifier le secteur angulaire *jₗ* comprenant le vecteur *̅U̅*̅;
iii) pour chaque alésage du porte-satellites, monter un pivot tel que pour chaque montage les secteurs angulaires identifiés *jₗ* et *i_{q}* se superposent.

L'orientation du pivot dans le porte-satellites lors de l'étape de montage iii) de manière à ce que les secteurs identifiés se superposent et donc que les vecteurs *̅U̅*̅ et *̅V̅*̅ ne soient pas disposés dans le même secteur angulaire, permet aux excentricités des axes réels du pivot et de l'alésage de se compenser en partie.

En outre, le porte-satellites peut porter des premiers moyens de couplage et les pivots peuvent porter des seconds moyens de couplage, disposés dans le secteur *i_{q},* lesdits seconds moyens de couplage comprennent une ouverture, ayant une forme apte à coopérer avec lesdits premiers moyens de couplage.

De plus, selon l'invention, l'ouverture peut être formée dans une excroissance radiale portée par le pivot.

Cela permet de facilement déduire les secteurs angulaires *i_{q}* où sont positionnés les axes réels des pivots.

Egalement selon une caractéristique de l'invention, les premiers moyens de couplage peuvent comprendre un premier organe en saillie agencé dans le secteur angulaire *jₗ,* le premier organe étant apte à être disposé dans *k* perçages, chacun disposé en périphérie d'un alésage et dans un des secteurs angulaires *j*₁ ...*jₗ* ...*jₖ* et dans lequel l'étape ii) peut comprendre en outre l'étape suivante :
- insérer le premier organe dans le *l*-ième perçage positionné dans le secteur angulaire *jₗ*.

Dès lors, chaque alésage comprend un organe porté par le porte-satellites et situé dans le secteur angulaire *jₗ* comprenant le vecteur *̅U̅*̅ et chaque pivot comprend une excroissance radiale E comprenant une ouverture, apte à coopérer avec l'organe. L'excroissance radiale E est située dans le secteur angulaire *i_{q}* comprenant le vecteur *-V̅.* De cette manière, les secteurs angulaires *jₗ* et *i_{q}* respectivement pour chacun des alésages et pour chacun des pivots sont visuellement identifiés. On peut de plus facilement en déduire les secteurs angulaires où sont positionnés les axes réels des alésages et des pivots.

L'étape iii) peut comprendre en outre l'étape suivante :
- orienter le pivot de sorte à insérer le premier organe porté par le porte-satellites dans l'ouverture de l'excroissance radiale E portée par le pivot.

Par conséquent, en montant le pivot de sorte à insérer l'organe dans l'ouverture de l'excroissance radiale *E_{q}* restante du pivot, on s'assure de monter le pivot dans l'alésage en l'orientant de sorte à superposer les secteurs angulaires identifiés *jₗ* et *i_{q}* respectivement de l'alésage et du pivot.

En superposant les secteurs angulaires *jₗ* et *i_{q},* les vecteurs *̅U̅*̅ et *̅V̅*̅ ne sont pas disposés dans le même secteur angulaire, ce qui signifie que le défaut de position des axes réels du pivot et de l'alésage se compensent, au moins en partie.

De plus, la coopération de l'organe et de l'ouverture de l'excroissance radiale *E_{q}* permet de réduire les erreurs d'orientation lors du montage du pivot dans l'alésage.

Ce procédé est une solution industriellement viable, permettant, par ailleurs, d'éviter l'appairage des alésages d'un porte-satellites et des pivots associés.

Les pivots et alésages sont respectivement divisés en *n* et *k* secteurs angulaires tel que *n* peut être supérieur ou égal à *k.*

Ainsi, lorsque *n* est strictement supérieur à *k,* la position de l'axe réel est plus précisément identifiée sur le pivot tout en évitant de découper l'alésage en autant de secteurs angulaires. Comme évoqué précédemment, chacun des secteurs angulaires des alésages comprennent des perçages disposés en périphérie des alésages sur le porte-satellites. De tels perçages en grand nombre sur le porte-satellites peuvent contribuer à son affaiblissement mécanique. Par conséquent, en limitant le nombre de secteurs angulaires *k* tel que *n* est supérieur à *k*, l'affaiblissement mécanique du porte-satellites résultant de la formation des perçages est ainsi réduit et mieux contrôlé.

A cette fin, *n* et *k* peuvent être compris entre 3 et 8, bornes incluses.

L'invention concerne également un train d'engrenages épicycloïdal ou planétaire obtenu par le procédé tel que décrit précédemment.

En outre, l'invention porte sur un train d'engrenages épicycloïdal comprenant un ou plusieurs alésages, chacun des alésages recevant un pivot comprenant un axe réel distinct d'un axe théorique, ledit pivot étant orienté angulairement de manière à ce que l'excentricité du pivot compense au moins en partie l'excentricité dudit alésage.

Un tel train d'engrenages épicycloïdal présente ainsi des excentricités minimisées des axes résultant des ensembles pivots-alésages. En orientant les pivots dans les alésages du train d'engrenages épicycloïdal, ce dernier présente une surcharge moindre des satellites des pivots et des alésages, sans pour autant modifier les tolérances de fabrication des alésages du porte-satellites et des pivots.

De plus, le montage d'un tel train d'engrenages ne nécessite pas d'appairage, permettant ainsi l'interchangeabilité des pièces lors du montage ou des opérations de maintenance. Ainsi, quel que soit le pivot monté dans un des alésages, l'orientation du pivot dans l'alésage, avec le procédé selon l'invention, permet de réduire le défaut résultant de l'ensemble pivot-alésage.

Selon une caractéristique de l'invention, le pivot du train d'engrenages épicycloïdal peut comprendre :
- au moins une piste de roulement dont l'axe coïncide avec l'axe réel du pivot, et
- au moins une portée de frettage du pivot dans un alésage dont l'axe coïncide avec l'axe théorique du pivot.

Les pivots utilisés lors du montage sont fabriqués en assurant une excentricité contrôlée de l'axe réel par rapport à l'axe théorique.

Par ailleurs, les alésages et les pivots peuvent comprendre respectivement des premiers et des seconds moyens de couplage aptes à coopérer ensemble afin de maintenir le pivot selon une orientation prédéterminé dans l'alésage, lesdits seconds moyens de couplage comprenant une ouverture, ayant une forme apte à recevoir avec lesdits premiers moyens de couplage.

Par exemple, les premiers moyens de couplage peuvent comprendre un organe en saillie.

Également, l'ouverture peut être formée dans une excroissance radiale portée par le pivot, et peut être apte à recevoir ledit organe en saillie.

Les moyens de couplage des alésages et des pivots peuvent être respectivement disposés dans un secteur angulaire comprenant un vecteur *̅U̅*̅ orienté à partir d'un axe théorique vers un axe réel et dans un secteur angulaire comprenant un vecteur *-V̅,* le vecteur *̅V̅*̅ étant orienté à partir d'un axe théorique vers un axe réel.

L'invention concerne également un train d'engrenages épicycloïdal ou planétaire susceptible d'être obtenu par le procédé tel que décrit précédemment

Par ailleurs, un tel train d'engrenages peut comprendre un ou plusieurs alésages, chacun des alésages recevant un pivot comprenant un axe réel distinct d'un axe théorique, ledit pivot peut être orienté angulairement de manière à ce que l'excentricité du pivot compense au moins en partie l'excentricité dudit alésage.

En particulier, le pivot peut comprendre :
- au moins une piste de roulement dont l'axe coïncide avec l'axe réel du pivot, et
- au moins une portée de frettage du pivot dans un alésage dont l'axe coïncide avec l'axe théorique du pivot.

Le train d'engrenages épicycloïdal peut comprendre un porte-satellites comportant des alésages dans lesquels sont agencés des pivots, les alésages et les pivots pouvant comprendre respectivement des premiers et des seconds moyens de couplage aptes à coopérer ensemble afin maintenir le pivot selon une orientation prédéterminée dans l'alésage, lesdits seconds moyens de couplage pouvant comprendre une ouverture, ayant une forme apte à recevoir avec lesdits premiers moyens de couplage.

En outre, les premiers moyens de couplage peuvent comprendre un organe en saillie.

Également, l'ouverture peut être formée dans une excroissance radiale E portée par le pivot et peut être apte à recevoir ledit organe en saillie.

Selon une autre caractéristique de l'invention, lesdits moyens de couplage des alésages et des pivots peuvent être respectivement disposés dans un secteur angulaire comprenant un vecteur *̅U̅*̅ orienté à partir d'un axe théorique vers un axe réel et dans un secteur angulaire comprenant un vecteur *-V̅,* le vecteur *̅V̅*̅ étant orienté à partir d'un axe théorique vers un axe réel.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1 est un schéma de face d'un train d'engrenages, vu de face, axialement depuis l'amont ;
- la figure 2 est un schéma longitudinal d'une turbomachine ;
- la figure 3 est une vue schématique d'un porte-satellites selon l'invention ;
- la figure 4 est une vue de coupe d'un pivot monté dans un alésage d'un porte-satellites ;
- la figure 5 est une vue en perspective d'un pivot fabriqué selon l'invention ;
- la figure 6 est un schéma illustrant une vue de coupe d'un pivot fabriqué obtenu par le procédé selon l'invention ;
- les figures 7a et 7b illustrent respectivement l'étape c) de montage du procédé selon l'invention ;
- la figure 8 est une vue schématique d'un train d'engrenages susceptible d'être obtenue par le procédé selon l'invention.

### DESCRIPTION DETAILLEE

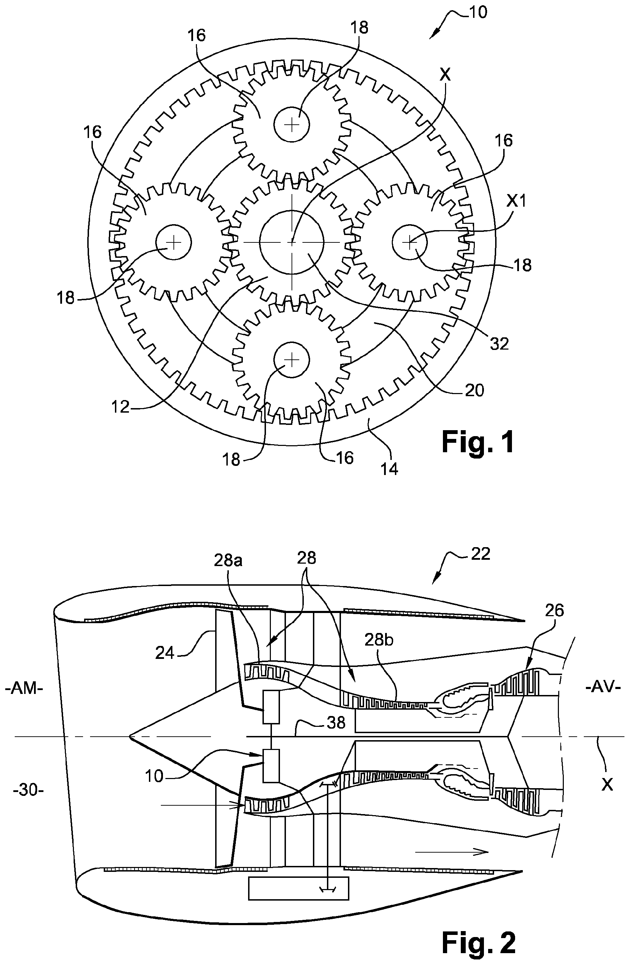

La figure 1 illustre schématiquement la structure d'un train d'engrenages épicycloïdal ou planétaire 10. Ce type de train d'engrenages 10 comprend classiquement un planétaire interne 12 (également appelé pignon central, soleil ou solaire) et un planétaire externe 14 (également appelé couronne extérieure), les deux planétaires étant coaxiaux. Le planétaire interne 12 peut être mobile en rotation autour de son axe X, le planétaire externe 14 pouvant être fixe, ou couplé en rotation à une hélice comme dans le cas d'un turbopropulseur ou à une roue de soufflante comme dans le cas d'un turboréacteur à double flux. Le train d'engrenages 10 comporte en outre des satellites, ou pignons satellites 16 montés de façon mobile en rotation sur des pivots 18 d'un porte-satellites 20. Chaque satellite 16 engrène simultanément avec le planétaire interne 12 et avec le planétaire externe 14. Le porte-satellites 20 est fixe ou pivotant autour de l'axe X du planétaire interne 12 et du planétaire externe 14. L'entrée peut être formée par le planétaire interne 12, et la sortie formée par le porte-satellites 20.

Dans un autre exemple, le porte-satellites 20 peut être fixe ou couplé en rotation à une hélice d'un turbopropulseur ou à une roue de soufflante d'un turboréacteur à double flux.

La figure 2 illustre schématiquement une turbomachine 22 pour aéronef dans laquelle des trains d'engrenages 10 sont utilisés en tant que réducteurs de vitesse pour réduire la vitesse de rotation d'un rotor, tel qu'une soufflante 24, indépendamment de la vitesse de rotation d'au moins une turbine 26 couplée axialement en aval à au moins un compresseur 28 dont la turbomachine est aussi équipée. A partir de l'entrée d'air frontale 30, la soufflante 24, puis le compresseur 28 sont traversés par de l'air.

Le pignon central, ou planétaire interne 12, entoure et est alors solidaire en rotation de l'arbre 32 du compresseur 28 comme illustré par exemple par les figures 1 et 2. Le train d'engrenages 10 peut en particulier être monté dans une enceinte annulaire formée radialement à l'intérieur d'un compresseur basse pression 28a agencé en aval de la roue de soufflante 24 et en amont d'un compresseur haute pression 28b comme visible sur la figure 2.

Comme cela est visible en considérant la figure 1, l'alignement des dentures des satellites avec les dentures des planétaires interne 12 et externe 14 est nécessaire au bon fonctionnement du train d'engrenages 10 et pour limiter les opérations de maintenance.

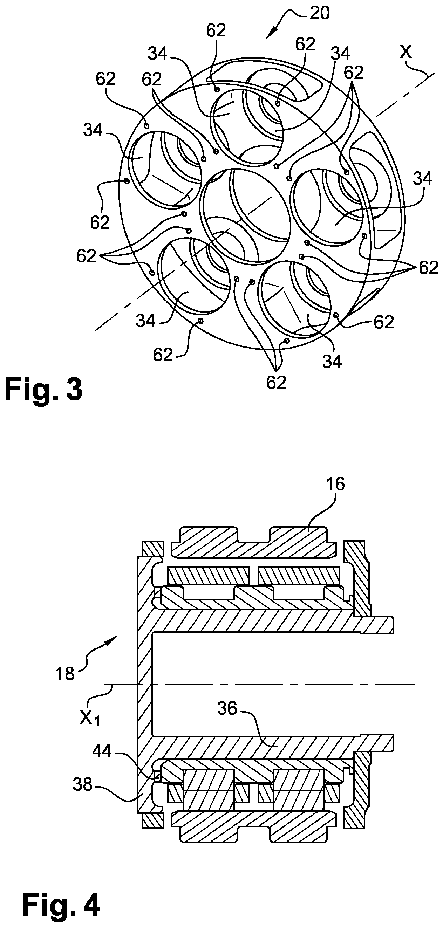

Un mauvais positionnement des satellites 16 dans les alésages 34 du porte-satellites 20, visibles sur la figure 3, implique un désalignement des dentures des satellites 16 avec la denture du planétaire interne 12 et la denture du planétaire externe 14. Il s'ensuit une disparité de la puissance transitant par les satellites 16 conduisant à une usure précoce des dentures.

Il est donc nécessaire de fournir une solution permettant de réduire autant que possible le désalignement des satellites 16 lors du montage de tels trains d'engrenages 10.

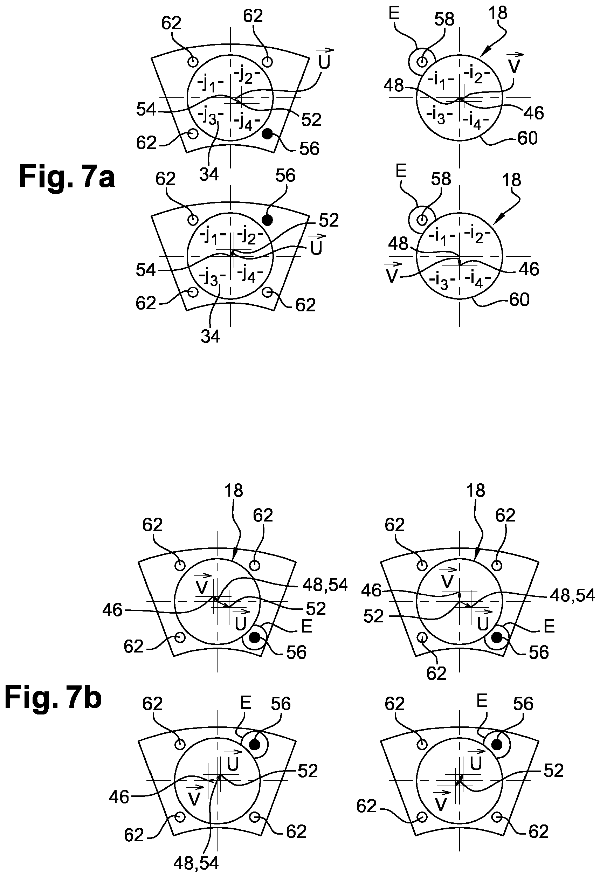

Pour cela, comme illustré en partie sur les figures 7a et 7b un procédé d'assemblage pour trains d'engrenages 10 est proposé. Le montage peut être effectué à partir d'au moins un pivot fabriqué selon une étape du procédé d'assemblage et d'un porte-satellites 20 comprenant un ou plusieurs alésages 34.

La figure 3 illustre un exemple de porte-satellites 20 selon l'invention, à partir duquel est assemblé un train épicycloïdal. Il comprend cinq alésages 34 régulièrement répartis autour de l'axe X et dimensionnés de sorte à ce qu'un pivot 18 puisse y être monté.

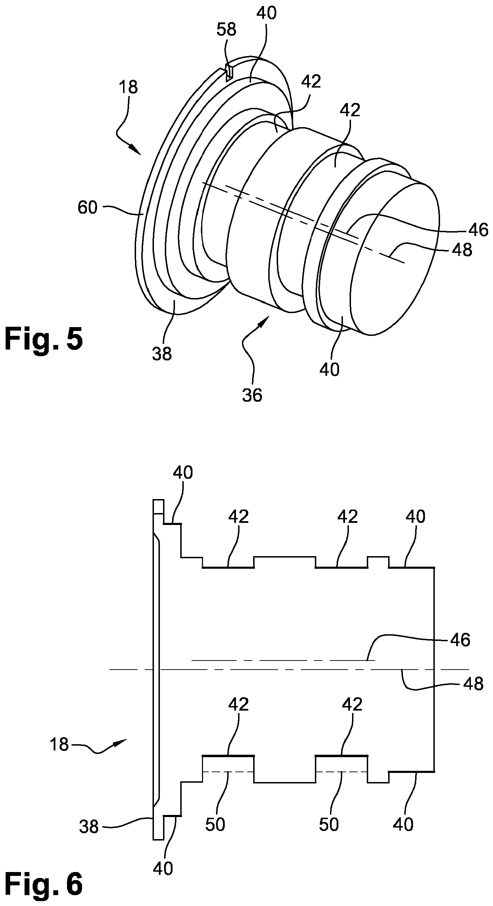

Un exemple de pivot fabriqué selon l'invention est visible sur la figure 5. Le pivot 18 comprend un axe 36, dont le diamètre est dimensionné de sorte à pouvoir être agencé dans les alésages 34 du porte-satellites 20. L'axe 36 est globalement cylindrique ou tronconique, dont une des extrémités est prolongée par une partie de liaison annulaire 38 s'étendant radialement vers l'extérieur (figure 4).

Le pivot 18 comprend en outre des portées de frettages 40 du pivot 18 dans un alésage 34. Le pivot 18 étant destiné à être monté fretté au niveau de ces portées de frettage 40 dans un des alésages 34 du porte-satellites 20, les portées de frettage 40 du pivot 18 dans l'alésage 34 correspond à une surface annulaire de l'axe 36 du pivot 18 qui sont destinées à être en contact serré avec au moins une partie de l'alésage 34 du porte-satellites 20. Ainsi, comme cela est visible sur la figure 4, lorsque le pivot 18 est monté dans un alésage 34 du porte-satellites 20, les portées de frettage 40 du pivot 18 sont en contact sur toute leur surface avec une partie de la surface annulaire interne de l'alésage 34.

Le pivot 18 comprend en outre des pistes de roulement 42 destinées à recevoir un roulement permettant de mettre en rotation des satellites 16 (visible sur la figure 1) qui engrènent simultanément avec le planétaire interne 12 et le planétaire externe 14 comme décrit en référence à la figure 1.

Le montage d'un pivot 18 dans un alésage est par ailleurs visible sur la figure 4. L'axe 36 du pivot 18 est agencé à l'intérieur de l'alésage 34 du porte-satellites 20 de sorte que la partie de liaison 38 vienne en appui sur la surface 44 du porte-satellites 20 en périphérie de l'alésage 34.

Dans l'exemple illustré par les figures 7a et 7b, le procédé est appliqué à deux alésages 34, d'un même porte-satellites 20 ou deux portes-satellites 20 distincts, et à deux pivots 18, fabriqué selon une première étape du procédé d'assemblage.

La première étape du procédé comprend une étape visant à fabriquer au moins un pivot 18 comprenant un axe réel 46 distinct d'un axe théorique 48. Un exemple de pivot 18 obtenu par cette première étape de procédé est illustré sur les figures 5 et 6.

Lorsqu'un pivot 18 ne présente pas de défaut, c'est-à-dire que son axe réel 46 et son axe théorique 48 sont confondus, cela signifie que les portées de frettage 40 et les pistes de roulement 42 sont coaxiales, ayant pour axe l'axe théorique 48 du pivot 18. Ainsi, l'étape de fabrication, visant à fabriquer un pivot 18 avec un défaut contrôlé, vise à fabriquer un pivot 18 dont au moins une piste de roulement 42 et au moins une portée de frettage 40 du pivot 18 dans l'alésage 34 ne sont pas coaxiales.

En particulier, le pivot 18 est fabriqué de sorte qu'il comprenne au moins une portée de frettage 40 du pivot 18 dans un alésage 34 dont l'axe de révolution coïncide avec l'axe théorique 48 du pivot 18. Par ailleurs, dans le même temps, le pivot 18 est fabriqué de sorte qu'il comprenne au moins une piste de roulement 42 dont l'axe de révolution coïncide avec l'axe réel 46 du pivot 18.

La figure 6 illustre un exemple de pivot 18 obtenu par la première étape du procédé selon l'invention. L'axe réel 46, correspondant à l'axe de révolution des deux pistes de roulements 42 est excentré de l'axe théorique 48, correspondant à l'axe de révolution des deux portées de frettage 40 du pivot 18 dans l'alésage 34. Les traits pointillés 50 correspondent à la position que devrait avoir la piste de roulement 42 du pivot 18 sans défaut dont l'axe de révolution coïncide avec l'axe théorique 48 du pivot 18 ainsi que l'axe de révolution des portées de frettage 40 du pivot 18 dans l'alésage 34 du porte-satellites 20.

Pour décaler de la sorte l'axe de révolution des pistes de roulement 42, lors de l'usinage du pivot 18, par exemple par tournage, l'axe selon lequel la pièce est mise en rotation, pour enlever la matière pour former les pistes de roulement 42 et les portées de frettage 40, est décalé lors de l'usinage des pistes de roulement 42, par rapport à l'axe d'usinage des portées de frettage 40.

Ainsi, lors de l'usinage de la pièce, le décalage de l'axe sur lequel la pièce est mise en rotation permet de contrôler et connaitre le positionnement de l'axe réel 46.

L'étape de fabrication comprend en outre une première étape consistant à caractériser la position connue relative de l'axe réel 46 du pivot 18 fabriqué par rapport à son axe théorique 48. Cette position est caractérisée par le vecteur *̅V̅*̅, orienté de l'axe théorique 48 du pivot 18 fabriqué vers l'axe réel 46, tel qu'illustré sur les figures 7a et 7b.

Pour chaque pivot 18 fabriqué un vecteur *̅V̅*̅ est défini. Le vecteur *̅V̅*̅ est orienté de l'axe théorique 48 vers l'axe réel 46 du pivot 18 fabriqué et a une norme égale à la distance entre l'axe théorique 48 et l'axe réel 46 du pivot 18 fabriqué. En d'autres termes, le vecteur *̅V̅*̅ correspond à la translation de l'axe selon lequel le pivot 18 est mis en rotation lors de l'usinage des pistes de roulement 42, par rapport à celui utilisé lors de l'usinage des portées de frettage 40.

Dans une réalisation pratique, compatible avec l'industrialisation des pièces, l'étape de fabrication comprend en outre une étape consistant à diviser régulièrement chacun des pivots 18 fabriqués en plusieurs secteurs angulaires identiques autour de leur axe théorique 48 respectifs. Ainsi, chaque pivot 18 est divisé en n secteurs angulaires *i*₁ *... i_{q}* ... *iₙ* s'étendant autour de l'axe théorique 48 du pivot 18 considéré.

Cette division en secteurs angulaires, permet de localiser dans quel secteur angulaire de la pièce se trouvent le vecteur *̅V̅*̅, et donc l'axe réel 46 du pivot 18 fabriqué. En particulier, une autre étape du procédé de fabrication vise à identifier le secteur angulaire *i_{q}* comprenant le vecteur *-V̅.*

La deuxième étape du procédé d'assemblage vise à mesurer la position d'un axe réel 52 de chacun des alésages 34 du ou des portes-satellites 20. Les alésages présentent ainsi chacun un axe réel 52 distinct de l'axée théorique 54. Comme illustré sur la figure 7a, la mesure, lors de cette première étape, permet de connaître la position de l'axe réel 52 par rapport à l'axe théorique 54 de chacun des alésages 34.

L'excentricité de l'axe réel 52 par rapport à l'axe théorique 54 des alésages 34 résulte en partie de défaut de fabrication impactant notamment la position des alésages 34 dans le porte-satellites 20.

La mesure de la position tridimensionnelle des axes réels 52 des alésages 34, est réalisée à l'aide d'une machine dédiée. Cette machine permet, par palpation de la circonférence de chaque alésage 34, de déterminer, par calcul, la position réelle du centre et donc de l'axe réel 52 de l'alésage 34.

Une fois les positions des axes réels 52 des pivots 18 fabriqués et des alésages 34 du/des portes-satellites 20 connues, la troisième étape du procédé d'assemblage vise à, pour chaque alésage 34 du porte-satellites 20, monter un des pivots 18 fabriqués dans l'alésage 34 et l'orienter angulairement de manière à ce que l'excentricité du pivot 18 compense au moins en partie l'excentricité dudit alésage 34. Par excentricité, on entend l'excentricité des axes réels 46, 52 par rapport aux axes théoriques 48, 54 des pivots 18 fabriqués et des alésages 34.

Pour permettre la compensation de ces excentricités du pivot 18 et l'alésage 34 recevant le pivot 18, la troisième étape du procédé d'assemblage comprend une première étape consistant à caractériser la position connue relative de l'axe réel 52 de l'alésage 34 par rapport à son axe théorique 54. Cette position est caractérisée par le vecteur *̅U̅*̅, orienté de l'axe théorique 54 de l'alésage 34 vers l'axe réel 52, tel qu'illustré sur les figures 7a et 7b.

Pour chaque alésage 34, un vecteur *̅U̅*̅ est défini. Le vecteur *̅U̅*̅ est orienté de l'axe théorique 54 vers l'axe réel 52 et a une norme égale à la distance entre l'axe théorique 54 et l'axe réel 52 de l'alésage 34.

Dans une réalisation pratique, compatible avec l'industrialisation des pièces, le procédé comprend une deuxième étape consistant à diviser, régulièrement et indépendamment de la division des pivots 18 fabriqués, les alésages 34 du porte-satellites 20 en plusieurs secteurs angulaires égaux autour de leurs axes théoriques 54. Ainsi, les alésages 34 sont indépendamment divisés régulièrement *k* secteurs angulaires *j*₁ ... *jₗ ... iₖ* s'étendant autour de leurs axes théoriques 54.

En conséquence, les pivots 18 fabriqués et les alésages 34, sont respectivement divisés en *n* et *k* secteurs, où *n* et *k* peuvent être égaux, comme le cas illustré par les figures 7a et 7b où *n* = *k* = 4.

Cette division de l'alésage 34 en secteurs angulaires, permet de localiser dans quel secteur angulaire de la pièce se trouvent le vecteur *̅U̅*̅, et donc l'axe réel 52 de l'alésage 34. En particulier, une étape du procédé de fabrication vise à identifier le secteur angulaire *jₗ* comprenant le vecteur *̅U̅*̅.

De là, la troisième étape du procédé d'assemblage comprend une étape supplémentaire illustrée par la figure 7b qui vise, à monter un des pivots 18 fabriqués dans l'alésage 34 et à l'orienter angulairement dans celui-ci tel que pour chaque montage les secteurs angulaires identifiés *jₗ* et *i_{q}* se superposent. En d'autres termes, le pivot 18 fabriqué est monté et orienté dans un des alésages 34 de sorte que l'axe réel 46 du pivot 18 et l'axe réel 52 de l'alésage 34 du montage, définis par les vecteurs *̅U̅*̅ et *̅V̅*̅, se compensent au moins en partie.

Comme cela est visible sur la figure 7b, l'assemblage des pivots 18 peut être réalisé indifféremment dans les deux alésages 34. Toutefois, lors du montage, le pivot 18 est monté tel que les vecteurs *̅U̅*̅ et *̅V̅*̅ ne soient pas dans le même secteur angulaire, c'est-à-dire afin que les secteurs angulaires identifiés *jₗ* et *i_{q}* se superposent.

Ce procédé ne nécessite pas d'appairage de pièces, de sorte que les pivots 18 peuvent être montés dans tous les alésages 34 à condition que l'orientation du pivot 18 soit respectée.

En pratique, la troisième étape du procédé d'assemblage est réalisée au moyen d'un dispositif de mise en position. Le dispositif de mise en position comprend des moyens de couplage complémentaires sur les pivots 18 et sur le porte-satellites 20. Le dispositif de mise en position permet d'orienter le pivot 18 et de le fixer dans l'orientation souhaitée lors du montage. En pratique, on comprendra ci-après que le dispositif réalise un détrompage au montage d'un pivot 18 dans un alésage 34, évitant un montage d'une manière inappropriée d'un pivot 18 dans un alésage 34 qui conduirait au contraire du résultat souhaité, c'est-à-dire à une augmentation des désalignements des dentures.

Comme cela est visible sur les figures 7a et 7b, les moyens de couplage comprennent des premiers moyens de couplage par coopération de forme portés par le porte-satellites 20. Ces premiers moyens de couplage comprennent un premier organe 56 apte à être disposé en saillie dans des perçages 62 disposés en périphérie des alésages 34. En particulier, les perçages 62 sont agencés de manière qu'il n'y ait qu'un perçage 62 par secteur angulaire pour chacun des alésages 34 du porte-satellites 20 tel qu'illustré sur la figure 3.

Pour chacun des alésages 34, une fois le secteur angulaire *jₗ* identifié, le premier organe 56 est disposé dans le perçage 62 positionné dans le secteur angulaire *jₗ* comprenant le vecteur *̅U̅*̅ et l'axe réel 52.

Cette étape permet donc, pour chaque alésage 34, de visualiser sans ambiguïté le secteur angulaire où se trouve l'axe réel 52 de l'alésage 34, et d'y disposer un moyen de couplage qui aidera par la suite au montage « orienté » d'un des pivots 18 fabriqués dans l'alésage 34, c'est-à-dire dans une position angulaire conduisant à une réduction des désalignements des dentures. Sur la figure 7b, qui illustre en partie cette étape, des pions 56 sont disposés dans les secteurs angulaires j2 et j4 comprenant le vecteur *̅U̅*̅ de ces deux alésages 34.

Comme illustré sur les figures 5, 7a et 7b, les moyens de couplage comprennent également des seconds moyens de couplage portés par les pivots 18 ayant une forme apte à coopérer avec les premiers moyens de couplage. Par exemple, les seconds moyens de couplage comprennent une ouverture 58, de sorte que le premier organe 56, par exemple un pion 56 porté par le porte-satellites 20, puisse être agencé à l'intérieur de cette ouverture 58. En particulier, comme illustré par la figure 5, chaque pivot comprend une ouverture 58 agencée sur le pourtour 60 du pivot 18. Dans l'exemple des figures 7a et 7b, les ouvertures des deux pivots 18 sont formées dans une excroissance radiale *E* du pourtour des pivots 18 qui est disposée en périphérie de la partie de liaison 38 du pivot 18.

Les seconds moyens de couplage sont conçus lors de l'étape de fabrication du pivot 18. En particulier, l'ouverture 58 ou l'excroissance radiale E comprenant l'ouverture 58 est réalisée, lors de la fabrication du pivot 18, de sorte à être agencée dans le secteur angulaire *i_{q}* comprenant le vecteur *-V̅.* Cela permet ainsi pour chaque pivot 18 d'identifier visuellement le secteur angulaire situé en direction opposée au secteur angulaire dans lequel se trouve l'axe réel 46 du pivot 18, et d'y disposer un moyen de couplage qui facilitera par la suite le montage « orienté » du pivot 18 dans l'alésage 34. Au terme de la fabrication des pivots 18, chacun des pivots 18 comprend une unique ouverture 58 ou une unique excroissance radiale *E* comprenant l'ouverture 58 comme visible sur les figures 5 et 7a.

Dès lors, l'ouverture 58 ou l'excroissance radiale *E* comprenant l'ouverture 58 du pivot 18 fabriqué constitue un détrompage au montage de l'ouverture de l'excroissance radiale *E* dans ledit organe du secteur *jₗ*.

Comme illustré figure à la 7b, les pions 56 portés par les porte-satellites 20, et l'ouverture 58 portée par le pivot 18, permettent d'identifier, directement ou indirectement, la position et l'orientation des vecteurs *̅U̅*̅ et *V̅.*

La troisième étape comprend ainsi en outre, dans une réalisation pratique du procédé, une étape consistant, lors du montage du pivot dans un des alésages, à orienter le pivot 18 de sorte à insérer le premier organe 56 en saillie porté par le portes-satellites 20 dans l'ouverture 58 de l'excroissance radiale E portée par le pivot 18. Comme cela est visible sur la figure 7b, le pivot 18 est orienté dans l'alésage 34 de sorte à faire coopérer le pion 56 de l'alésage 34 avec l'ouverture 58 de l'excroissance radiale *E* du pivot 18 permet d'assurer que l'axe réel 46 du pivot 18 et l'axe réel 52 de l'alésage 34 ne soient pas disposés dans le même secteur angulaire.

En superposant les secteurs angulaires *jₗ* et *i_{q}* visuellement identifiés sur chacun des alésages 34 et des pivots 18, on s'assure que lors du montage, *̅U̅*̅ et *̅V̅*̅ sont disposés tel que l'axe réel 46 du pivot 18 et l'axe réel 52 de l'alésage 34 du montage, se compensent au moins en partie.

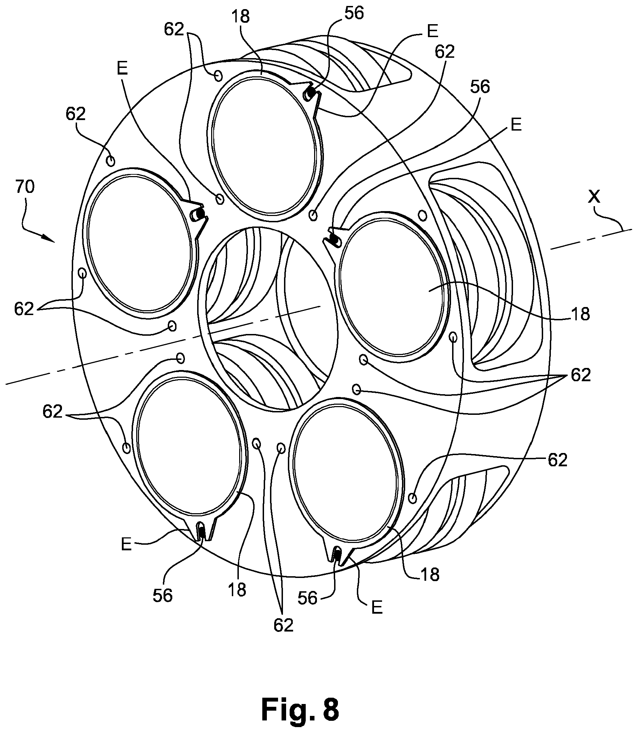

Comme cela est visible sur la figure 8, le procédé permet d'obtenir un train épicycloïdal 70, dans lequel les pivots 18 sont orientés dans les alésages 34, à l'aide de la coopération entre des ouvertures 58 des excroissances radiales *E* des pivots 18 et les pions 56 disposés autour des alésages 34.

Comme illustré sur la figure 7b, les pivots 18 sont interchangeables : ils peuvent être montés indifféremment dans les deux alésages 34, à condition que les pivots 18 soient correctement orientés à l'aide de leur excroissance radiale *E*.

Dans le cas particulier où, pour un alésage, le vecteur *̅U̅*̅ est positionné sur la frontière entre deux secteurs angulaires, on choisit aléatoirement un des deux secteurs comme étant le secteur comprenant le vecteur *̅U̅*̅. De même pour un pivot, lorsque le vecteur -*̅V̅*̅ est positionné sur la frontière entre deux secteurs angulaires, on choisit aléatoirement un des deux secteurs comme étant le secteur comprenant le vecteur *-V̅.* Selon une forme de réalisation de l'invention, les pivots 18 et les alésages 34 sont divisés respectivement en *n* et *k* secteurs angulaires tel que *n* peut être supérieur ou égal à *k.*

Selon une autre forme de réalisation *n* et *k* peuvent être compris entre 3 et 8, bornes incluses.

En particulier, en limitant le nombre de secteurs angulaires des alésages 34, on limite également le nombre de perçage 62 en périphérie des alésages 34 sur les porte-satellites. Cela permet de limiter et de contrôler l'affaiblissement du porte-satellites 20 par les perçages 62.

## Revendications

1. Procédé d'assemblage pour un train (70) d'engrenages épicycloïdal ou planétaire d'un porte-satellites (20) comprenant un ou plusieurs alésages (34), chacun des alésages (34) étant destiné à recevoir un pivot (18), le procédé étant **caractérisé en ce qu'**il comprend les étapes suivantes :
a) fabriquer au moins un pivot (18) comprenant un axe réel (46) distinct d'un axe théorique (48);
b) mesurer la position d'un axe réel (52) de chacun desdits un ou plusieurs alésages (34) du porte-satellites (20), l'axe réel de chacun desdits un ou plusieurs alésages (34) étant distinct de l'axe théorique de chacun desdits un ou plusieurs alésages ;
c) pour chaque alésage (34) du porte-satellites (20), monter un pivot (18) dans ledit alésage (34) et l'orienter angulairement de manière à ce que l'excentricité du pivot (18) compense au moins en partie l'excentricité dudit alésage (34).

2. Procédé selon la revendication 1, dans lequel l'étape a) comprend :
- fabriquer au moins un pivot (18) comprenant :
▪ au moins une piste de roulement (42) dont l'axe coïncide avec l'axe réel (46) du pivot (18), et
▪ au moins une portée de frettage (40) du pivot (18) dans un alésage (34) dont l'axe coïncide avec l'axe théorique (48) du pivot (18).

3. Procédé selon l'une des revendications précédentes, dans lequel l'étape a) comprend en outre les étapes suivantes :
- diviser chacun desdits pivots (18) en n secteurs angulaires *i*₁... *i_{q}* ... *iₙ* s'étendant autour de l'axe théorique (48) dudit pivot (18);
- définir un vecteur *̅V̅*̅ orienté de l'axe théorique (48) vers l'axe réel (46), et identifier le secteur angulaire *i_{q}* comprenant le vecteur *-V̅.*

4. Procédé selon la revendication 3, dans lequel l'étape c) comprend les étapes suivantes :
i) diviser chacun desdits alésages (34) du porte-satellites (20) en *k* secteurs angulaires *j*₁ ... *j_{¡}* ... *jₖ* s'étendant autour de l'axe théorique (54) dudit alésage;
ii) pour chaque alésage définir un vecteur *̅U̅*̅ orienté de l'axe théorique (54) vers l'axe réel (52), et identifier le secteur angulaire *jₗ* comprenant le vecteur *U̅;*
iii) pour chaque alésage (34) du porte-satellites (20), monter un pivot (18) tel que pour chaque montage les secteurs angulaires identifiés *jₗ* et *i_{q}* se superposent.

5. Procédé selon la revendication 4, dans lequel le porte-satellites (20) porte des premiers moyens de couplage et les pivots (18) portent des seconds moyens de couplage, disposés dans le secteur *i_{q},* lesdits seconds moyens de couplage comprenant une ouverture (58), ayant une forme apte à coopérer avec lesdits premiers moyens de couplage.

6. Procédé selon la revendication 5, dans lequel l'ouverture (58) est formée dans une excroissance radiale *E* portée par ledit pivot (18).

7. Procédé selon la revendication 6, dans lequel les premiers moyens de couplage comprennent un premier organe (56) en saillie agencé dans le secteur angulaire *jₗ*, le premier organe étant apte à être disposé dans *k* perçages (62), chacun disposé en périphérie d'un alésage (34) et dans un des secteurs angulaires *j*₁ ... *jₗ* ...*jₖ* , et dans lequel l'étape ii) comprend en outre l'étape suivante :
- insérer le premier organe (56) dans le *l*-ième perçage (62) positionné dans le secteur angulaire *jₗ*.

8. Procédé selon la revendication 7, dans lequel l'étape iii) comprend en outre l'étape suivante :
- orienter le pivot (18) de sorte à insérer le premier organe (56) porté par le porte-satellites (20) dans l'ouverture (58) de l'excroissance radiale *E* portée par le pivot (18).

9. Procédé selon l'une des revendications 4 à 8, dans lequel *n* est supérieur ou égal à *k* et/ou *n* et *k* sont compris entre 3 et 8, bornes incluses.

10. Train d'engrenages épicycloïdal (70) obtenu par le procédé selon l'une des revendications 1 à 9.

11. Train d'engrenages épicycloïdal (70) selon la revendication 10, comprenant un ou plusieurs alésages (34), chacun des alésages (34) présentant un axe réel distinct de l'axe théorique dudit alésage, et chacun des alésages (34) recevant un pivot (18) comprenant un axe réel (46) distinct d'un axe théorique (48), ledit pivot (18) étant orienté angulairement de manière à ce que l'excentricité du pivot (18) compense au moins en partie l'excentricité dudit alésage (34).

12. Train d'engrenages épicycloïdal (70) selon la revendication 11, dans lequel le pivot (18) comprend :
- au moins une piste de roulement (42) dont l'axe coïncide avec l'axe réel (46) du pivot (18), et
- au moins une portée de frettage (40) du pivot (18) dans un alésage (34) dont l'axe coïncide avec l'axe théorique (48) du pivot (18).

13. Train d'engrenages épicycloïdal (70) selon l'une des revendications 11 ou 12, comprenant un porte-satellites (20) comportant des alésages (34) dans lesquels sont agencés des pivots (18), les alésages (34) et les pivots (18) comprenant respectivement des premiers et des seconds moyens de couplage aptes à coopérer ensemble afin maintenir le pivot (18) selon une orientation prédéterminée dans l'alésage (34), lesdits seconds moyens de couplage comprenant une ouverture (58), ayant une forme apte à recevoir avec lesdits premiers moyens de couplage.

14. Train d'engrenages épicycloïdal (70) selon la revendication 13, **caractérisé en ce que** les premiers moyens de couplage comprennent un organe (56) en saillie.

15. Train d'engrenages épicycloïdal (70) selon la revendication 14, **caractérisé en ce que** l'ouverture (58) est formée dans une excroissance radiale *E* portée par le pivot (18) et est apte à recevoir ledit organe (56) en saillie.

16. Train d'engrenages épicycloïdal (70) selon l'une des revendications 13 à 15, **caractérisé en ce que** lesdits moyens de couplage des alésages (34) et des pivots (18) sont respectivement disposés dans un secteur angulaire comprenant un vecteur *̅U̅*̅ orienté à partir d'un axe théorique (52) vers un axe réel (54) et dans un secteur angulaire comprenant un vecteur *-V̅,* le vecteur *̅V̅*̅ étant orienté à partir d'un axe théorique (48) vers un axe réel (46).

## Patentansprüche

1. Verfahren zur Montage eines Planetenträgers (20) mit einer oder mehreren Bohrungen (34) für ein Umlauf- oder Planetengetriebe (70), wobei jede der Bohrungen (34) zur Aufnahme eines Drehzapfens (18) bestimmt ist, wobei das Verfahren **dadurch gekennzeichnet ist, dass** es die folgenden Schritte umfasst:
a) Herstellen zumindest eines Drehzapfens (18) mit einer tatsächlichen Achse (46), die sich von einer theoretischen Achse (48) unterscheidet;
b) Messen der Position einer tatsächlichen Achse (52) jeder der einen oder mehreren Bohrungen (34) des Planetenträgers (20), wobei die tatsächliche Achse jeder der einen oder mehreren Bohrungen (34) sich von der theoretischen Achse jeder der einen oder mehreren Bohrungen unterscheidet;
c) für jede Bohrung (34) des Planetenträgers (20) Anbringen eines Drehzapfens (18) in der Bohrung (34) und winkelmäßiges Ausrichten desselben derart, dass die Exzentrizität des Drehzapfens (18) die Exzentrizität der Bohrung (34) zumindest teilweise ausgleicht.

2. Verfahren nach Anspruch 1, wobei Schritt a) umfasst:
- Herstellen zumindest eines Drehzapfens (18), enthaltend:
▪ zumindest eine Laufbahn (42), deren Achse mit der tatsächlichen Achse (46) des Drehzapfens (18) zusammenfällt, und
▪ zumindest einen Schrumpfsitz (40) des Drehzapfens (18) in einer Bohrung (34), dessen Achse mit der theoretischen Achse (48) des Drehzapfens (18) zusammenfällt.

3. Verfahren nach einem der vorhergehenden Ansprüche, wobei Schritt a) ferner die folgenden Schritte umfasst:
- Unterteilen von jedem der Drehzapfen (18) in n Winkelsektoren *iᵢ* ... *i_{q}* ... *iₙ,* die sich um die theoretische Achse (48) des Drehzapfens (18) herum erstrecken;
- Definieren eines Vektors *̅V̅*̅, der von der theoretischen Achse (48) zur tatsächlichen Achse (46) hin ausgerichtet ist, und Identifizieren des Winkelsektors *i_{q},* der den Vektor -*̅V̅*̅ umfasst.

4. Verfahren nach Anspruch 3, wobei Schritt c) die folgenden Schritte umfasst:
i) Unterteilen von jeder der Bohrungen (34) des Planetenträgers (20) in *k* Winkelsektoren *j₁* ... *jₗ* ... *jₖ,* die sich um die theoretische Achse (54) der Bohrung herum erstrecken;
ii) für jede Bohrung Definieren eines Vektors *̅U̅*̅, der von der theoretischen Achse (54) zur tatsächlichen Achse (52) hin ausgerichtet ist, und Identifizieren des Winkelsektors *jₗ,* der den Vektor *̅U̅*̅ umfasst;
iii) für jede Bohrung (34) des Planetenträgers (20) Anbringen eines Drehzapfens (18) derart, dass sich bei jeder Anbringung die identifizierten Winkelsektoren *jₗ* und *i_{q}* überlagern.

5. Verfahren nach Anspruch 4, wobei der Planetenträger (20) erste Kopplungsmittel trägt und die Drehzapfen (18) zweite Kopplungsmittel tragen, die im Sektor *i_{q}* angeordnet sind, wobei die zweiten Kopplungsmittel eine Öffnung (58) aufweisen, die eine zum Zusammenwirken mit den ersten Kopplungsmitteln geeignete Form aufweist.

6. Verfahren nach Anspruch 5, wobei die Öffnung (58) in einem radialen Vorsprung E ausgebildet ist, der von dem Drehzapfen (18) getragen wird.

7. Verfahren nach Anspruch 6, wobei die ersten Kopplungsmittel ein erstes vorstehendes Element (56) enthalten, das in dem Winkelsektor *jₗ* angeordnet ist, wobei das erste Element in *k* Ausbohrungen (62) angeordnet werden kann, die jeweils am Umfang einer Bohrung (34) und in einem der Winkelsektoren *j₁* ... *jₗ ... jₖ* angeordnet sind, und wobei Schritt ii) ferner den folgenden Schritt umfasst:
- Einsetzen des ersten Elements (56) in die /-te Ausbohrung (62), die sich im Winkelsektor *jₗ* befindet.

8. Verfahren nach Anspruch 7, wobei Schritt iii) ferner den folgenden Schritt umfasst:
- Ausrichten des Drehzapfens (18), um das von dem Planetenträger (20) getragene erste Element (56) in die Öffnung (58) des von dem Drehzapfen (18) getragenen radialen Vorsprungs E einzusetzen.

9. Verfahren nach einem der Ansprüche 4 bis 8, wobei *n* größer oder gleich *k* ist und/oder *n* und *k* zwischen 3 und 8, Grenzwerte eingeschlossen, liegen.

10. Planetengetriebe (70), das mit dem Verfahren nach einem der Ansprüche 1 bis 9 erhalten wird.

11. Planetengetriebe (70) nach Anspruch 10, enthaltend eine oder mehrere Bohrungen (34), wobei jede der Bohrungen (34) eine tatsächliche Achse aufweist, die sich von der theoretischen Achse der Bohrung unterscheidet, wobei jede der Bohrungen (34) einen Drehzapfen (18) aufnimmt, der eine tatsächliche Achse (46) aufweist, die sich von einer theoretischen Achse (48) unterscheidet, wobei der Drehzapfen (18) winkelmäßig so ausgerichtet ist, dass die Exzentrizität des Drehzapfens (18) die Exzentrizität der Bohrung (34) zumindest teilweise ausgleicht.

12. Planetengetriebe (70) nach Anspruch 11, wobei der Drehzapfen (18) enthält:
- zumindest eine Laufbahn (42), deren Achse mit der tatsächlichen Achse (46) des Drehzapfens (18) zusammenfällt, und
- zumindest einen Schrumpfsitz (40) des Drehzapfens (18) in einer Bohrung (34), dessen Achse mit der theoretischen Achse (48) des Drehzapfens (18) zusammenfällt.

13. Planetengetriebe (70) nach einem der Ansprüche 11 oder 12, enthaltend einen Planetenträger (20) mit Bohrungen (34), in denen Drehzapfen (18) angeordnet sind, wobei die Bohrungen (34) und die Drehzapfen (18) jeweils erste bzw. zweite Kopplungsmittel enthalten, die dazu geeignet sind, zusammenzuwirken, um den Drehzapfen (18) in einer vorbestimmten Ausrichtung in der Bohrung (34) zu halten, wobei die zweiten Kopplungsmittel eine Öffnung (58) mit einer Form aufweisen, die dazu geeignet ist, die ersten Kopplungsmittel aufzunehmen.

14. Planetengetriebe (70) nach Anspruch 13, **dadurch gekennzeichnet, dass** die ersten Kopplungsmittel ein vorstehendes Element (56) enthalten.

15. Planetengetriebe (70) nach Anspruch 14, **dadurch gekennzeichnet, dass** die Öffnung (58) in einem radialen Vorsprung E ausgebildet ist, der von dem Drehzapfen (18) getragen wird, und dazu geeignet ist, das vorstehende Element (56) aufzunehmen.

16. Planetengetriebe (70) nach einem der Ansprüche 13 bis 15, **dadurch gekennzeichnet, dass** die Mittel zur Kopplung der Bohrungen (34) und der Drehzapfen (18) jeweils in einem Winkelsektor, der einen Vektor *̅U̅*̅ umfasst, der von einer theoretischen Achse (52) zu einer tatsächlichen Achse (54) hin ausgerichtet ist, bzw. in einem Winkelsektor angeordnet sind, der einen Vektor -*̅V̅*̅ umfasst, wobei der Vektor *̅V̅*̅ von einer theoretischen Achse (48) zu einer tatsächlichen Achse (46) hin ausgerichtet ist.

## Claims

1. A process for assembling an epicyclic or planetary gear train (70) of a planet gear carrier (20) comprising one or more bores (34), each of the bores (34) being intended to receive a pivot (18), the process comprising the following steps:
a) manufacturing at least one pivot (18) comprising a real axis (46) distinct from a theoretical axis (48);
b) measuring the position of a real axis (52) of each of said one or more bores (34) of the carrier (20); the real axis of each of said one or more bores (34) being distinct from the theoretical axis of each of said one or more bores;
c) for each bore (34) of the carrier (20), mounting a pivot (18) in said bore (34) and angularly orienting it so that the eccentricity of the pivot (18) at least partially makes up for the eccentricity of said bore (34).

2. The assembly process according to claim 1, wherein step a) includes the following:
- the manufacturing of at least one pivot (18) comprising:
▪ at least one raceway (42), the axis of which coincides with the real axis (46) of the pivot (18), and
▪ at least one shrink-fitting seat (40) of the pivot (18) in a bore (34), the axis of which coincides with the theoretical axis (48) of the pivot (18).

3. The process according to one of the preceding claims, wherein step a) also includes the following steps:
- dividing each of said pivots (18) into *n* angular sectors *i*₁ *... i_{q}* ... *iₙ* extending about the theoretical axis (48) of said pivot (18);
- defining a vector *̅V̅*̅ oriented from the theoretical axis (48) to the real axis (46), and identifying the angular sector *i_{q}* comprising vector *-V̅.*

4. The process according to claim 3, wherein step c) comprises the following steps:
i) dividing each of said bores (34) of the carrier (20) into *k* angular sectors *j*₁ *...jₗ* ...*jₖ* extending about the theoretical axis (54) of said bore;
ii) for each bore, defining a vector *̅U̅*̅ oriented from the theoretical axis (54) to the real axis (52), and identifying the angular sector *jₗ* including vector *U̅;*
iii) for each bore (34) of the carrier (20), mounting of a pivot (18) such that for each mounting the identified angular sectors *jₗ* and *i_{q}* are superimposed.

5. The process according to claim 4, wherein the carrier (20) carries first coupling means and the pivots (18) carry second coupling means, arranged in sector *i_{q},* said second coupling means comprising an opening (58), having a shape adapted to cooperate with said first coupling means.

6. The process according to claim 5, wherein the opening (58) is formed from a radial growth E carried by said pivot (18).

7. The process according to claim 6, wherein the first coupling means comprise a first projecting member (56) arranged in angular sector *jₗ*, the first member being adapted to be arranged in *k* holes (62), each arranged around a bore (34) and in one of the angular sectors *j*₁ ... *jₗ - jₖ,* and wherein step ii) further comprises the following step:
- inserting the first member (56) into the *l*-th hole (62) positioned in the angular sector *jₗ*.

8. The process according to claim 7, wherein step iii) further comprises the following steps:
- orienting the pivot (18) so as to insert the first member (56) carried by the carrier (20) into the opening (58) of the radial growth *E* carried by the pivot (18).

9. The process according to one of claims 4 to 8, wherein *n* is greater than or equal to *k* and/or *n* and *k* are between 3 and 8, terminals included.

10. An epicyclic gear train (70) obtainable by the process according to one of claims 1 to 9.

11. An epicyclic gear train (70) according to claim 10 comprising one or more bores (34), each of the bores (34) receiving a pivot (18) comprising a real axis (46) distinct from a theoretical axis (48), said pivot (18) being angularly oriented so that the eccentricity of the pivot (18) at least partially makes up for the eccentricity of said bore (34).

12. The epicyclic gear train (70) according to claim 11, wherein the pivot (18) comprises:
- at least one raceway (42), the axis of which coincides with the real axis (46) of the pivot (18), and
- at least one shrink-fitting seat (40) of the pivot (18) in a bore (34), the axis of which coincides with the theoretical axis (48) of the pivot (18).

13. The epicyclic gear train (70) according to one of claims 11 or 12, comprising a planet gear carrier (20) having bores (34) in which pivots (18) are arranged, the bores (34) and the pivots (18) respectively comprising first and second coupling means adapted to cooperate with each other to maintain the pivot (18) in a predetermined orientation in the bore (34), said second coupling means comprising an opening (58), having a shape adapted to receive said first coupling means.

14. The epicyclic gear train (70) according to claim 13, **characterized in that** the first coupling means comprises a projecting member (56).

15. The epicyclic gear train (70) according to claim 14, **characterized in that** the opening (58) is formed in a radial growth *E* carried by the pivot (18) and is adapted to receive said projecting member (56).

16. The epicyclic gear train (70) according to one of claims 13 to 15, **characterized in that** said coupling means of the bores (34) and pivots (18) are respectively arranged in an angular sector comprising a vector *̅U̅*̅ oriented from a theoretical axis (52) to a real axis (54) and in an angular sector comprising a vector *-V̅,* the vector *̅V̅*̅ being oriented from a theoretical axis (48) to a real axis (46).
